# EUROPEAN PATENT APPLICATION

(11) **EP 1 688 301 A2**
(43) Date of publication of application: **09.08.2006**
(21) Application number: 05076806.8
(22) Date of filing: 04.08.2005
(51) Int. Cl.: B60Q 1/34, B60Q 1/26

(54) **Led directional indicator**

(30) Priority: 04.02.2005 IT MI20050029 U
(71) Applicant: Ecie Electric Components, and Instruments Europe S.R.L., Lainate (MI) (IT)
(72) Inventor: Delfi, Luigi, Lutago - Valle Aurina (BZ) (IT)
(74) Representative: Raimondi, Margherita

(57) **Abstract**

Directional indicator comprising a housing (10), a light source (20) incorporated in a power supply and control circuit (100), in which said light source (20) comprises a plurality of high-power LEDs (21) arranged in series with each other and with the said power supply and control circuit (100).

## Description

The present invention relates to a directional indicator, in particular for vehicles, comprising a plurality of high-power LEDs arranged in series.

It is known in the sector relating to vehicle lighting that there exists the need to provide directional change indicators in the form of light sources of the LED (light-emitting diode) type which are driven by a control unit able to ensure intermittent light emission and checking and signalling of any faults in the light source.

It is also known that, from the point of view of fault checking, the LED light sources known in the art have drawbacks arising from the fact that, in order to obtain the quantity of emitted light envisaged by the norms, it is necessary to use a large number of low-power LEDs arranged along a plurality of series lines parallel to each other.

Although achieving the function of obtaining the quantity of emitted light, this solution is however unsuitable for fault detection in that the possible failure to light up of only one or a small number of LEDs produces the unlit condition of the entire respective series line, but an overall variation in the current drawn which cannot be detected by normal resolution control circuits. The faulty operation of the indicator is therefore not signalled to the driver.

The technical problem which is posed, therefore, is that of providing a directional indicator, in particular for vehicles, which is able to allow safe and repeatable detection of any faults, including partial faults of the light-emitting devices.

Within the scope of this problem it is required, moreover, that the directional indicator should have small dimensions, be easy and inexpensive to produce and install and allow a wide range of constructional possibilities able to be included in the various aesthetically characteristic forms in which the indicators are produced, so as to be able to be adapted to most widely varying models of vehicles.

These results are obtained according to the present invention by a directional indicator comprising a housing and a light source incorporated in a power supply and control circuit, in which said light source comprises a plurality of high-power LEDs arranged in series with each other and with the said power supply and control circuit.

Further details may be obtained from the following description of a non-limiting example of embodiment of the subject of the present invention provided with reference to the accompanying drawings in which:
Figure 1 shows a front view of an example of embodiment of a directional indicator according to the present invention and
Figure 2 shows a schematic view of the indicator according to Fig. 1 with associated electric operating diagram.

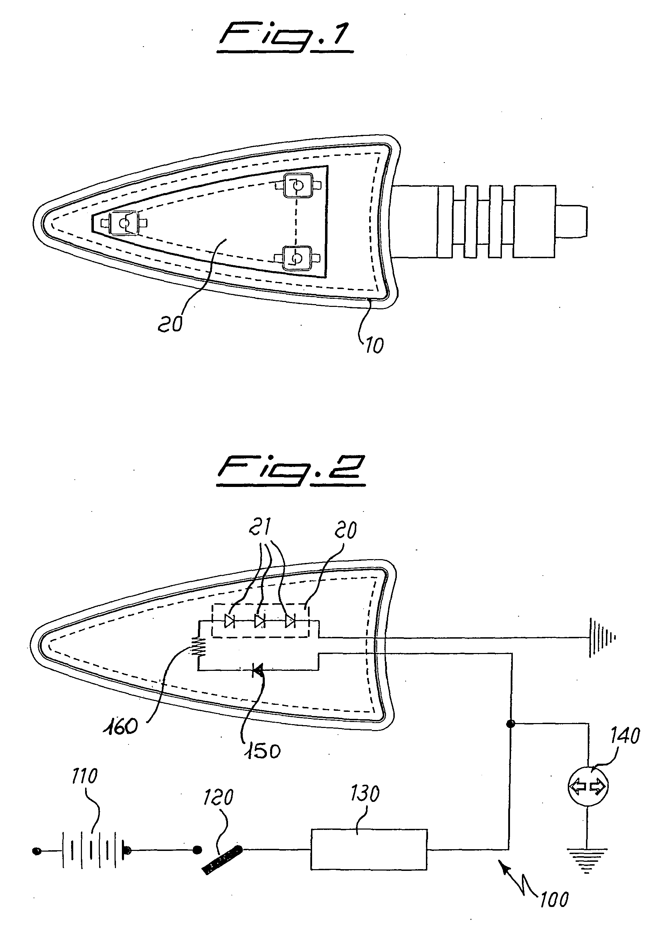

As shown in Fig. 1, a directional indicator according to the present invention comprises a housing 10 which has, arranged inside it, a light source 20 connected to the power supply and control circuit 100.

In greater detail, said light source 20 consists of a plurality of high-power LEDs 21 arranged in series with each other and along a single branched line of the electrical circuit 100 which envisages a power supply 110, a switch 120, an intermittence device 130, a signalling lamp 140, a diode 150 and a resistance 160.

According to preferred embodiments the LEDs 21 are of the high-power type - characterized by currents of 350 mA and more - which allow an approved indicator with only three LEDs to be produced.

The operating principle of the indicator is as follows:
- the necessary number of LEDs 21 is arranged in series with each other and with the branched line of the electric power supply and control circuit 100;
- if there are no faults, activation of the switch 120 results in the normal operation of the indicator;
- if there is a fault affecting even only one of the three LEDs 21, the entire series line is opened, causing an interruption in the current which allows the indicator lamp 132 to light up, thereby making evident the fault in the circuit;
- said emission devices 21 are arranged along a substantially central area of the housing 10.

According to preferred embodiments, said emission devices 21 are arranged in a substantially central area of the housing 10 and optionally at the vertices of a triangle. It is envisaged moreover that any fault in the indicator may also be signalled by means of a possible increase in the intermittence or signalling of another kind.

It is therefore clear how the directional indicator according to the invention allows a light emission of sufficient intensity to be achieved, ensuring at the same time reliable and repeatable detection of any fault, even only of a partial nature, using means which are low-cost and easy to obtain and assemble, allowing moreover a wide range of different constructional forms so that the illuminating body may be adapted to the different stylistic designs and spaces available in different vehicles.

## Claims

1. Directional indicator comprising a housing (10), a light source (20) incorporated in a power supply and control circuit (100), **characterized in that** said light source (20) comprises a plurality of high-power LEDs (21) arranged in series with each other and with the said power supply and control circuit (100).

2. Directional indicator according to Claim 1, **characterized in that** said LEDs (21) are supplied with currents of not less than 350 mA.

3. Directional indicator according to Claim 1, **characterized in that** said emission devices (21) are arranged in a substantially central area of the housing (10).

4. Directional indicator according to Claim 1, **characterized in that** said emission devices (21) are arranged at the vertices of a triangle.

5. Directional indicator according to Claim 1, **characterized in that** said power supply and control circuit (100) comprises a power supply (110), a switch (120), an intermittence device (130), a signalling lamp (140) and a diode (150).
